# DEMANDE DE BREVET EUROPEEN

(11) **EP 4 810 194 A1**
(43) Date de publication de la demande: **23.09.2026**
(21) Numéro de dépôt: 25165165.9
(22) Date de dépôt: 20.03.2025
(51) Int. Cl.: B23Q 1/48

(54) **MACHINE D'USINAGE**

(71) Demandeur: Precitrame Machines SA, 2720 Tramelan (CH)
(72) Inventeur: Robert, Vincent, 2065 Savagnier (CH); Droz, Fabrice, 2718 Lajoux (CH); Burkhalter, David, 2800 Delémont (CH)

(57) **Abrégé**

L'invention concerne une Machine pour l'usinage de pièces comportant un bâti (1) ainsi qu'une broche-outil destinée (2) à porter un outil (2a). La machine comporte encore un porte pièce principal (3) destiné à maintenir une pièce à usiner (4), mobile par rapport à la broche-outil, en translation selon trois axes X, Y et Z non parallèles entre-eux, et en rotation selon un axe B, le porte pièce principal (3) étant monté sur un berceau (5b) solidaire d'un arbre creux (5a) mobile en rotation autour de l'axe B. La machine comporte de plus un support pièce secondaire (6) actionnable par des moyens de commande entre une position d'engagement au contact de la pièce à usiner (4) et une position de dégagement sans contact avec la pièce à usiner. De manière remarquable, la machine comporte également un module de reprise (10) logé au moins partiellement dans l'arbre creux (5a) et s'étendant au travers d'une ouverture (5c) du berceau (5b), ledit module de reprise (10) comportant une coulisse (11) mobile en translation selon l'axe B entre une position repliée et une position déployée, le support pièce secondaire (6) étant relié cinématiquement à la coulisse (11).

## Description

### Domaine technique

La présente invention se rapporte à une machine d'usinage. Elle concerne, plus particulièrement, une machine d'usinage comportant un module de reprise permettant de terminer l'usinage de la pièce sur la même broche d'usinage.

### Etat de la technique

L'usinage d'une pièce dans une machine-outil nécessite de maintenir la pièce de manière rigide dans un porte pièce pendant les opérations d'enlèvement de matière. Une partie de la pièce sur laquelle s'effectue le maintien n'est pas accessible pour être usinée. Pour terminer la pièce sans avoir à la reprendre sur un autre poste d'usinage, il faut prévoir un dispositif de reprise au sein même de la machine pour modifier le serrage de la pièce et rendre accessible la dernière face.

La demande EP1175278 divulgue une machine adaptée à l'usinage de pièces qui comporte un premier porte pièce ainsi qu'un dispositif mobile muni d'une pince pour saisir la pièce déjà usinée et réaliser une opération d'usinage supplémentaire. Cependant l'implantation d'un tel dispositif prend beaucoup de place et n'est pas facilement adaptable, notamment dans des micro machines où le volume de la zone d'usinage est limité.

La demande EP4461458 présente une micro machine d'usinage à cinq axes qui comporte un porte-pièce secondaire muni d'une pince conçue pour saisir la pièce usinée à l'extrémité d'une barre. Le porte pièce secondaire est fixé sur la coulisse en Y et ne dispose pas de cinématique particulière. Cette configuration utilise la rotation existante du porte pièce principal jusqu'à une position de transfert à 90° où la pièce peut être saisie par la pince du porte pièce secondaire. Il est alors possible de sectionner la barre et de terminer l'usinage de la dernière face. Même si elle est implantable dans le volume de travail d'une micro machine, cette solution présente plusieurs limitations. Le porte pièce secondaire reste à demeure dans le volume de travail et limite la rotation du berceau porte pièce autour de l'axe B. L'usinage s'effectue alors que la pièce et l'outil sont entre les mords ouverts de la pince du porte pièce secondaire ce qui demande d'avoir une grande ouverture de pince, limite les possibilités de déplacement de l'outil autour de la pièce et augmente les risques de collision. La présence permanente de la pince à proximité de la pièce limite également l'accessibilité à la pièce pour les opérations de chargement et déchargement, de maintenance, ou de contrôle visuel. Une fois la pièce transférée au porte pièce secondaire, la fin de l'usinage s'effectue uniquement sur trois axes de translation alors que la dernière face est dans une position défavorable, parallèle à la broche d'usinage, ce qui limite fortement les possibilités de réaliser des géométries complexes.

Les demandes US2015367468 et EP4299242 décrivent des machines d'usinage à cinq axes dans lesquelles un support rotatif est conçu pour maintenir une pièce sur un appui tout en lui laissant un degré de liberté en rotation. Il est ainsi possible de réaliser un détourage de la pièce. Le support rotatif est monté sur le berceau de la machine ce qui a pour inconvénients d'augmenter son inertie et d'encombrer l'espace de travail.

L'objectif de l'invention est de remédier aux différents inconvénients de l'art antérieur pour améliorer l'intégration d'un support pièce secondaire dans une machine d'usinage multiaxes en particulier une micro machine d'usinage présentant un espace de travail réduit.

### Divulgation de l'invention

Le but de l'invention est atteint par une machine d'usinage comportant :
- un bâti,
- une broche-outil destinée à porter un outil,
- un porte pièce principal destiné à maintenir une pièce à usiner, mobile par rapport à la broche-outil, en translation selon trois axes X, Y et Z non parallèles entre-eux, et en rotation selon un axe B, le porte pièce principal étant monté sur un berceau solidaire d'un arbre creux mobile en rotation autour de l'axe B,
- un support pièce secondaire actionnable par des moyens de commande entre une position d'engagement au contact de la pièce à usiner et une position de dégagement sans contact avec la pièce à usiner. La machine selon l'invention comporte également un module de reprise logé au moins partiellement dans l'arbre creux et s'étendant au travers d'une ouverture du berceau, ledit module de reprise comportant une coulisse mobile en translation selon l'axe B entre une position repliée et une position déployée, le support de pièce secondaire étant relié cinématiquement à la coulisse.

Cet agencement permet d'incorporer un support pièce secondaire pour effectuer une opération de reprise sur la même broche d'usinage en ayant un impact limité sur les capacités d'usinage et l'accessibilité à la zone d'usinage lorsque le support pièce secondaire n'est pas utilisé grâce à l'escamotage du support pièce secondaire et à l'intégration du module de reprise dans l'arbre de rotation sans encombrer l'espace de travail.

Selon un aspect avantageux, le support pièce secondaire est monté sur la coulisse.

Cet agencement permet d'amener le support pièce secondaire au voisinage de la pièce maintenue dans le porte pièce principale et de dégager le support pièce secondaire pour ne pas entraver les opérations d'usinage initiales.

Selon un aspect avantageux, le support pièce secondaire est monté sur le berceau.

Dans cette configuration, la coulisse constitue les moyens de commande qui permettent l'engagement et le retrait du support pièce secondaire au contact de la pièce à usiner.

Selon un aspect avantageux, les axes X, Y et Z sont perpendiculaires, l'axe Z étant vertical.

Selon un aspect avantageux, l'axe B est parallèle à l'axe Y.

Selon un aspect avantageux, la broche outil est montée sur une première glissière déplaçable selon l'axe Z en référence à une seconde glissière déplaçable selon l'axe X en référence au bâti et dans lequel l'arbre creux est monté mobile en rotation sur une troisième glissière mobile en translation en référence au bâti selon l'axe Y.

Selon un aspect avantageux, le porte pièce principal est fixé à une broche-pièce montée sur le berceau et mobile en rotation autour d'un axe C perpendiculaire à l'axe B.

Selon un aspect avantageux, le support pièce secondaire est un porte pièce secondaire comportant des moyens de préhension aptes à saisir une pièce maintenue dans le porte pièce principal lorsque la coulisse est dans la position déployée et que le berceau est dans une position de transfert.

Cet agencement permet de transférer la pièce à usiner sur le porte pièce secondaire pour la terminer.

Selon un aspect particulièrement avantageux, le module de reprise comporte des moyens de pivotement aptes à pivoter la coulisse en rotation autour de l'axe B entre une orientation de transfert et une orientation d'usinage espacées d'une valeur déterminée comprise entre 0 et 180°.

Cet agencement permet de réaliser un retournement complet de la pièce à usiner pour présenter la dernière face à usiner selon une orientation optimale vis-à-vis de la broche-outil.

Selon un aspect avantageux de l'invention, la coulisse est dans l'orientation de transfert quand elle est dans sa position déployée et dans l'orientation d'usinage quand elle dans sa position repliée.

Selon un aspect avantageux de l'invention, les moyens de pivotement définissant la position angulaire de la coulisse en référence au berceau sont constitués d'une came et d'un suiveur de came, solidaire pour l'un de la coulisse et pour l'autre du berceau.

Selon un aspect avantageux de l'invention, le support pièce secondaire est un presse flanc destiné à venir en appui sur une pièce à usiner.

Selon un autre aspect avantageux de l'invention, le support pièce secondaire est un support rotatif destiné à venir en appui sur une pièce à détourer.

Cet agencement permet d'effectuer une opération de détourage sur la pièce à usiner.

### Brève description des dessins

D'autres détails de l'invention apparaîtront plus clairement à la lecture de la description qui suit, faite en référence aux dessins annexés dans lesquels :
- La figure 1 représente une vue des éléments principaux d'une machine selon l'invention,
- la figure 2 représente une vue éclatée d'éléments de l'invention,
- les figures 3 à 5 représentent un premier mode de réalisation de l'invention dans 3 états successifs,
- les figures 6 à 8 représentent le module de reprise du premier mode de réalisation respectivement dans une position repliée, une position intermédiaire et une position déployée,
- les figures 9 et 10 représentent un deuxième mode de réalisation de l'invention respectivement dans une position repliée et une position déployée,
- les figures 11 à 12 représentent un troisième mode de réalisation de l'invention respectivement dans une position repliée et une position déployée.

### Modes de réalisation de l'invention

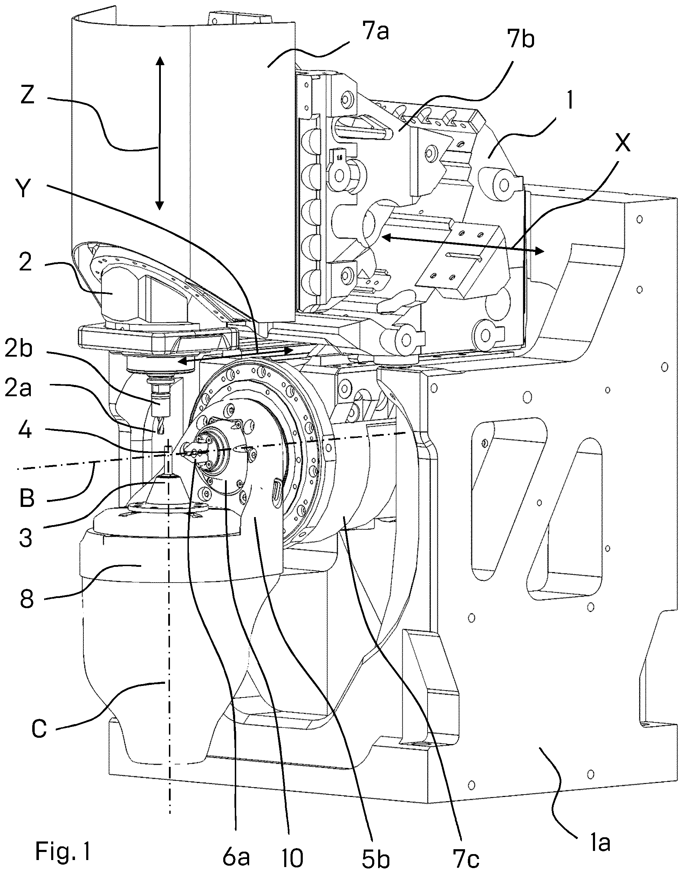

La présente invention porte sur une machine d'usinage comportant au moins quatre axes d'usinage, soit trois axes en translation et au moins un axe en rotation. La figure 1 représente une vue des éléments principaux d'une telle machine d'usinage. Cette structure est destinée à être placée dans un coffrage de protection et à fonctionner avec différents dispositifs d'alimentation et de commande.

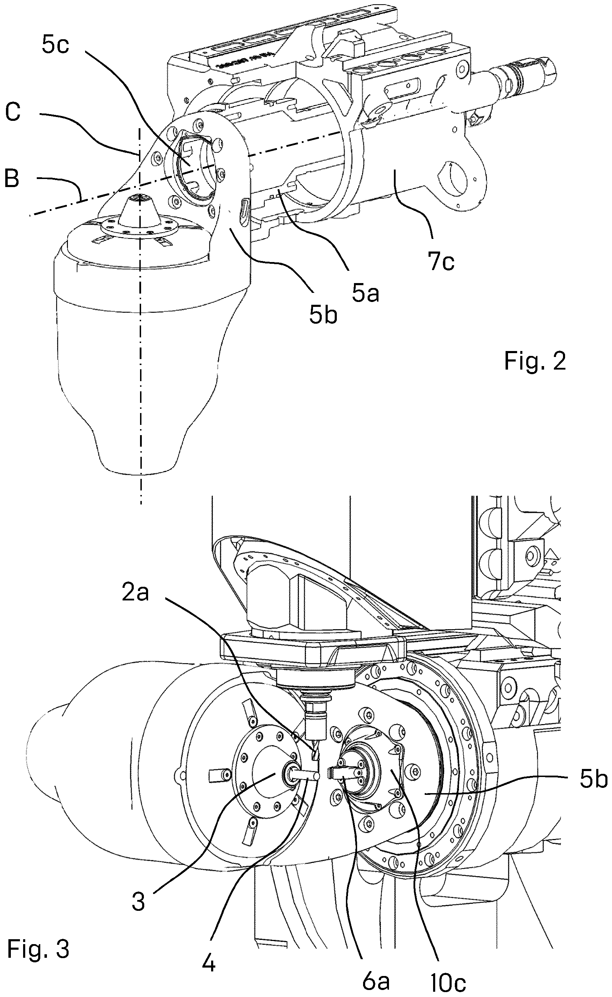

La machine d'usinage comporte un bâti 1 dont la rigidité élevée contribue à la précision et la répétabilité de l'usinage. Le bâti 1 est monté sur un support 1a. La machine comporte également une broche-outil 2 destinée à porter un outil 2a par l'intermédiaire d'un porte-outil 2b ainsi qu'un porte pièce principal 3 destiné à maintenir une pièce à usiner 4. Le porte pièce principal 3 est mobile par rapport à la broche-outil 2 selon au moins quatre degrés de liberté: trois degrés de liberté en translation selon trois axes X, Y et Z non parallèles entre eux, et au moins un degré de liberté en rotation selon un axe B. Pour cela, le porte pièce principal 3 est monté sur un berceau 5b solidaire d'un arbre creux 5a mobile en rotation autour de l'axe B et visible sur la figure 2.

Dans l'exemple présenté, les axes X, Y et Z sont perpendiculaires entre eux, l'axe Z étant vertical et par conséquent les axes X et Y étant horizontaux. L'axe B est parallèle à l'axe Y. Selon la configuration particulière présentée, la broche-outil 2 est montée mobile en translation en référence au bâti 1 selon les axes X et Z, la broche-outil 2 étant montée sur une première glissière 7a déplaçable le long de l'axe Z en référence à une seconde glissière 7b déplaçable selon l'axe X en référence au bâti 1. Le porte pièce principal 3 est monté sur le berceau 5b solidaire de l'arbre creux 5a, lui-même monté mobile en rotation en référence à une troisième glissière 7c déplaçable en référence au bâti 1 selon un axe horizontal Y, perpendiculaire à l'axe X. Dans l'exemple présenté l'axe B est parallèle à l'axe Y, l'axe creux 5a étant monté pivotant dans la troisième glissière 7c, si bien que le porte-pièce principal est mobile en rotation et en translation en référence au bâti selon l'axe B. Bien entendu, l'invention ne se limite pas à cette architecture de machine particulière, les trois glissières assurant les trois déplacements en translation pourraient, par exemple, être montées en série entre le bâti et la broche outil.

Dans le mode de réalisation présenté, la machine comporte également un cinquième axe d'usinage. Dans ce cas, le porte pièce principal 3 n'est pas solidaire du berceau 5b mais est fixé à une broche-pièce 8 montée sur le berceau 5b et mobile en rotation autour d'un axe C perpendiculaire à l'axe B.

Afin de pouvoir terminer l'usinage de la pièce à usiner 4 sans avoir à la reprendre sur un autre poste, la machine comporte également un support de pièce secondaire 6. Le support pièce secondaire 6 est actionnable par des moyens de commande entre une position d'engagement au contact de la pièce à usiner 4 et une position de dégagement sans contact avec la pièce à usiner. Le support pièce secondaire 6 peut prendre plusieurs formes en fonction du type d'usinage à effectuer pour terminer la pièce.

La machine comporte encore un module de reprise 10 logé au moins partiellement dans l'arbre creux 5a et s'étendant au travers d'une ouverture 5c du berceau. Le module de reprise 10 comporte une coulisse 11 mobile en translation selon l'axe B entre une position repliée et une position déployée. Dans le premier mode de réalisation, le support pièce secondaire 6 est monté sur la coulisse 11. Lorsque la coulisse 11 est dans la position repliée, comme on peut le voir sur les figures 1, 3, 9 et 11, le support pièce secondaire se trouve en retrait et n'entrave pas les déplacements relatifs de l'outil et de la pièce à usiner lors de la première phase d'usinage. Il ne limite pas non plus l'amplitude angulaire de la rotation du berceau autour de l'axe B ni l'accessibilité à la zone d'usinage. Par ailleurs, le module de reprise qui s'étend le long de l'axe B n'a qu'une faible incidence sur le moment d'inertie de l'ensemble tournant autour de l'axe B.

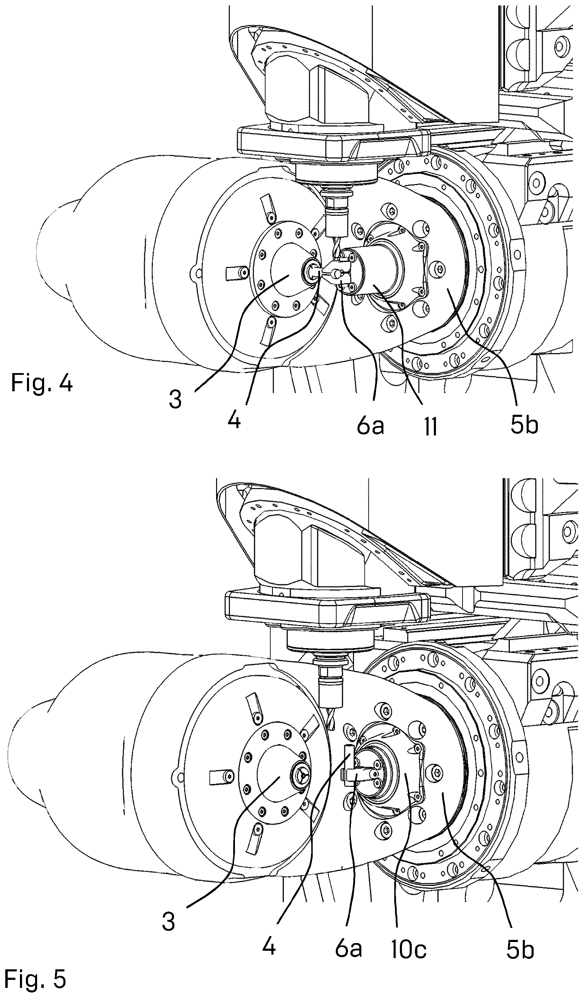

Dans un premier mode de réalisation présenté sur les figures 3 à 8 le support pièce secondaire 6 est un porte pièce secondaire 6a comportant des moyens de préhension, typiquement une pince actionnable par des moyens de commande pour en piloter l'ouverture et la fermeture. Une fois la coulisse 11 en position déployée et le porte pièce principal 3 dans une position de transfert déterminée, le porte pièce secondaire 6a est apte à saisir la pièce maintenue dans le porte pièce principal 3. Dans l'exemple présenté, la position de transfert correspond à une inclinaison du berceau 5b de 90° comme dans la configuration des figures 3 et 4. La pièce maintenue dans les deux portes pièce peut ainsi être sectionnée à l'aide d'un outil adapté, la pièce finale restant dans le porte pièce secondaire 6a. La portion restante dans le porte-pièce principal 3 peut être éliminée ou, dans le cas d'une barre, être déplacée au travers du porte pièce principal 3 pour débuter une nouvelle pièce. Le porte pièce secondaire 6a est apte à maintenir la pièce à usiner 4 lorsque la coulisse 11 retourne dans sa position repliée telle que représentée sur la figure 5 afin de réaliser l'usinage de la dernière face et sortir une pièce entièrement terminée.

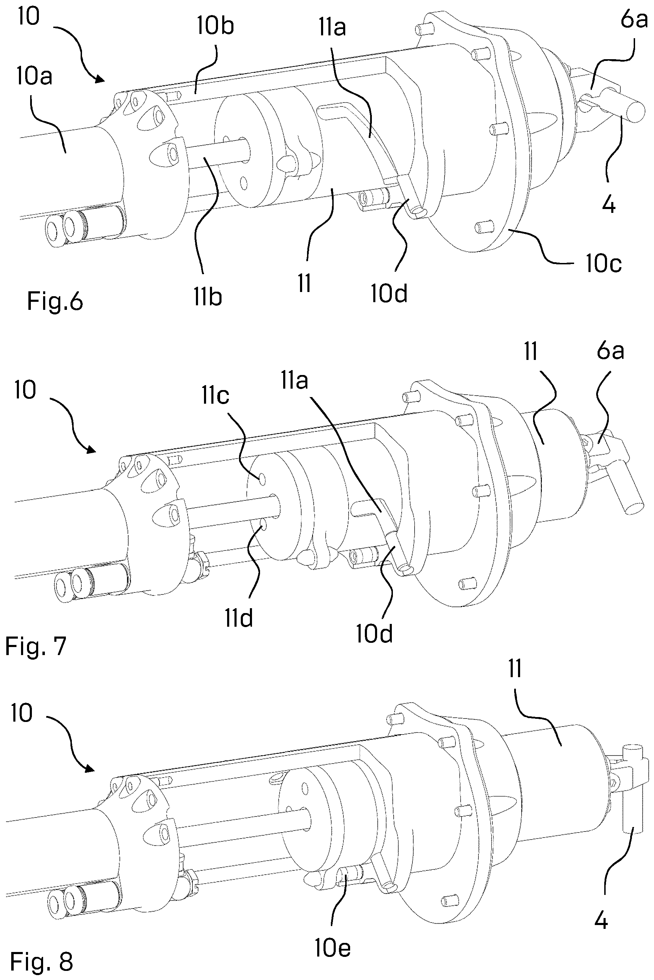

Les figures 6 à 8 représentent un module de reprise 10 dans différentes positions de la coulisse 11. Le module de reprise 10 est fixé au berceau 5b par l'intermédiaire d'un couvercle 10c de telle sorte que le module de reprise 10 se trouve logé au moins partiellement dans l'arbre creux 5a et s'étende au travers de l'ouverture 5c du berceau dans la direction de l'axe B. Le couvercle est solidaire d'un corps cylindrique 10b à l'extrémité duquel est fixé un actionneur 10a, typiquement un moteur ou un vérin. L'actionneur 10a est agencé pour déplacer la coulisse 11 dans le corps cylindrique 10b par l'intermédiaire d'une tige 11b de telle sorte que la coulisse 11 puisse se déplacer en translation selon l'axe B entre une position repliée et une position déployée représentée respectivement aux figures 6 et 8, la figure 7 représentant une position intermédiaire.

Des ouvertures 11c, 11d sont prévus dans la coulisse 11 pour le passage d'éléments flexibles destinés à alimenter des moyens de commandes permettant d'actionner le porte pièce secondaire 6a pour saisir, maintenir ou libérer une pièce à usiner 4.

Des butées 10e sont prévues pour limiter la course de la coulisse et positionner précisément et de manière répétable, en translation et en rotation, le support pièce secondaire dans les positions repliée et déployée de la coulisse 11.

Dans le premier mode de réalisation, la coulisse 11 est également mobile en rotation autour de l'axe B en formant une liaison pivot glissant avec le corps cylindrique 10b. Par ailleurs, le module de reprise comporte des moyens de pivotement aptes à pivoter la coulisse 11 en rotation autour de l'axe B entre une orientation de transfert et une orientation d'usinage espacées d'une valeur déterminée comprise entre 0 et 180°.

Dans l'exemple présenté, la coulisse 11 est dans sa position de transfert quand elle est conjointement dans sa position déployée et dans son orientation de transfert alors qu'elle est dans sa position d'usinage quand elle est conjointement dans sa position repliée et dans son orientation d'usinage.

Les moyens de pivotement peuvent prendre plusieurs formes. On peut prévoir un vérin rotatif monté en série sur l'actionneur linéaire, ou un actionneur électromagnétique linéaire rotatif combiné. Les liaisons glissière et pivot de la coulisse 11 en référence au corps cylindrique 10b peuvent également être liées pour constituer par exemple une liaison hélicoïdale.

Dans l'exemple présenté, les degrés de liberté en translation et en rotation de la coulisse 11 en référence au corps cylindrique 10b et donc au berceau 5b avec qui il est solidaire, sont liés par un système à came. Les moyens de pivotement définissant la position angulaire de la coulisse 11 en référence au berceau 5b sont constitués d'une came 11a et d'un suiveur de came 10d, solidaires pour l'un de la coulisse et pour l'autre du berceau. Dans le mode d'exécution particulier présenté, la came 11a est une rainure ménagée sur la coulisse 11 dans laquelle est logée l'extrémité d'une goupille 10d fixée au corps cylindrique 10b. Une rainure pourrait tout aussi bien être ménagée dans la paroi interne du corps cylindrique 10b et une goupille fixée au niveau de la coulisse 11. En déplaçant la coulisse de la position déployée à la position repliée le long de l'axe B, la goupille 10d suit le chemin de came formée par la rainure 11a ce qui contraint la coulisse 11 à pivoter autour de l'axe B d'une valeur prédéterminée définie par la forme de la came. Dans l'exemple présenté, la came est agencée pour que les positions angulaires autour de l'axe B de la coulisse dans ses positions déployée et repliée soient espacées de 90°.

La rotation de la coulisse 11 combinée à sa translation le long de l'axe B explique le changement d'orientation du porte pièce secondaire 6a entre la position déployée de la coulisse représentée sur la figure 4 et sa position repliée représentée sur les figures 3 et 5. En ajoutant la rotation du berceau 5b jusqu'à la position de transfert et la rotation de la coulisse lorsqu'elle retourne dans sa position de repli, on obtient une rotation globale de 180° de la pièce à usiner 4 par rapport à sa position d'origine représentée à la figure 1. Le retournement complet de la pièce permet de présenter la dernière face à usiner dans une orientation optimale, orthogonale à la direction de la broche d'usinage 2 et d'ainsi pouvoir réaliser un usinage complet selon les quatre axes X,Y, Z et B lorsque la coulisse 11 est dans la position repliée représentée sur la figure 5.

L'homme du métier saura modifier les caractéristiques de la machine en fonction de la géométrie de la pièce à usiner. Pour augmenter l'amplitude angulaire du berceau lors de l'usinage de la dernière face, il est possible de prévoir un angle de transfert déterminé dont la valeur est comprise dans l'amplitude de basculement du berceau 5b soit environ plus ou moins 120°. Par exemple on peut fixer un angle de transfert de 60°, et une rotation de la coulisse de 120° entre l'orientation de transfert et l'orientation d'usinage.

L'implantation dans l'arbre creux 5a d'un module de reprise 10 muni d'un support pièce secondaire escamotable permet de terminer la pièce à usiner en profitant de tous les degrés de liberté de la machine, y compris la rotation autour de l'axe B, sans impacter significativement les capacités d'usinage initiales concernant l'amplitude des déplacements relatifs de l'outil et de la pièce, l'accessibilité de la zone d'usinage et l'inertie du berceau.

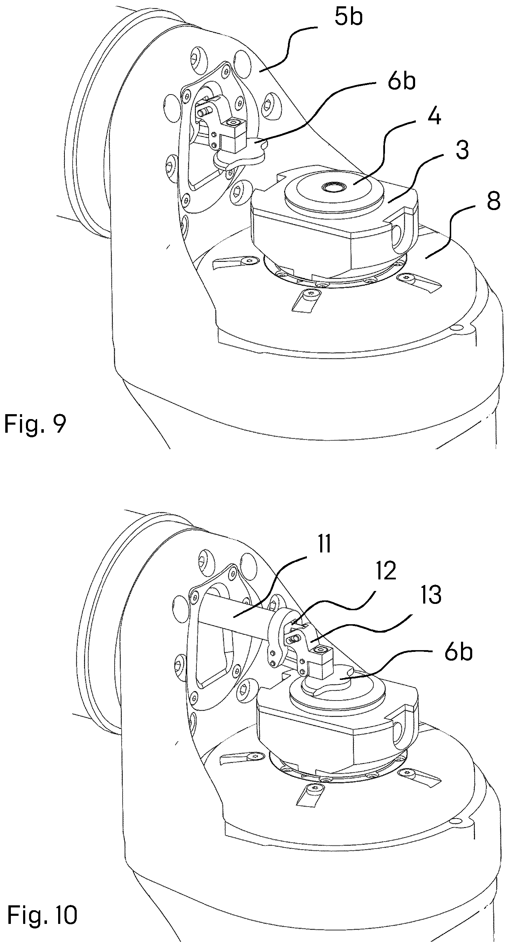

Les figures 9 et 10 présentent un deuxième mode de réalisation de l'invention dans lequel le support pièce secondaire 6 est un presse flanc 6b destiné à venir en appui sur une pièce à usiner 4 montée sur un porte pièce principal 3. Un presse flanc permet de venir en appui sur une partie de la pièce à usiner pour la maintenir et réaliser l'usinage de zones restées accessibles. Dans le second mode de réalisation, le presse flanc 6b est monté à l'extrémité d'une coulisse 11 susceptible de se déplacer parallèlement à l'axe B entre une position repliée et une position déployée. Une fois la coulisse dans la position déployée représentée à la figure 10, un vérin 12, actionné par des moyens de commandes situés dans le module de reprise, entraine une bride 13 sur laquelle est monté le presse flanc 6b. Dans l'exemple présenté, la bride 13 est montée sur un parallélogramme déformable de telle sorte que les surfaces de contact du presse flanc et de la pièce à usiner 4 restent parallèles. Le presse flanc 6b peut ainsi être déplacé selon une translation circulaire ayant une composante orthogonale au plan de posage de la pièce jusqu'à venir dans une position d'engagement au contact de la pièce à usiner. D'autres solutions sont envisageables, le presse flanc pourrait être simplement pivoté à l'extrémité de la coulisse et sa rotation commandé par le vérin 12. Dans ce cas le presse flanc aurait une trajectoire circulaire ayant également une composante orthogonale au plan de posage de la pièce à usiner.

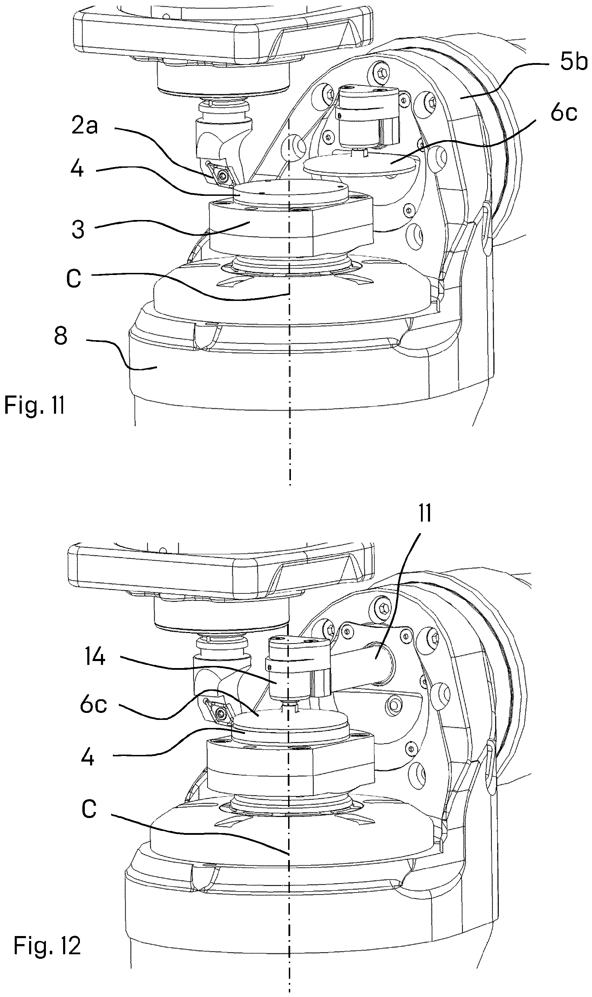

Les figures 11 et 12 présentent un troisième mode de réalisation de l'invention dans lequel le support pièce secondaire est un support rotatif 6c destiné à venir en appui sur une pièce à détourer. Le porte pièce principal 3 est monté sur une broche-pièce 8 pour être entrainé en rotation autour de l'axe C. Le porte pièce principal 3 maintient une pièce à usiner 4 sur laquelle peuvent être effectuées différentes opérations d'usinage lorsque le support pièce secondaire est en position de repli telle que représenté sur la figure 11. Pour obtenir une surface de révolution sur le pourtour de la pièce, on réalise un détourage de la pièce en l'entrainant en rotation contre un outil 2a de type burin. Durant l'opération de détourage, il est nécessaire de maintenir la pièce avec un support pièce secondaire exerçant une pression orthogonale au plan de posage d'une façon similaire au presse flanc 6b. La pièce étant entrainée en rotation, le support rotatif 6c est libre en rotation autour de l'axe C. Un vérin à faible course 14 est monté à l'extrémité de la coulisse 11 pour déplacer le support rotatif 6c orthogonalement au plan de posage jusqu'à venir dans une position d'engagement au contact de la pièce à usiner.

Dans les exemples présentés des moyens de commande spécifiques permettent d'actionner le support pièce secondaire. Dans des solutions alternatives non représentées, les moyens de commande sont directement la coulisse 11, le support pièce étant actionné par le mouvement relatif de la coulisse par rapport au berceau. Le support pièce peut par exemple, être pivoté sur la coulisse ou monté sur une bride 13 semblable à celle des figures 9 et 10 en étant relié cinématiquement au berceau de sorte que le déplacement de la coulisse provoque conjointement le déplacement du support pièce et son engagement sur la pièce à usiner. Dans le cas d'une pince, la machine peut être agencée pour que le déplacement de la coulisse vers sa position déployée provoque conjointement le déplacement de la pince et sa fermeture. Inversement le support pièce pourrait être monté sur le berceau et relié cinématiquement à la coulisse. Dans le cas d'un presse flanc, celui-ci peut être actionné par la coulisse afin d'être engagé sur la pièce lors du déplacement de la coulisse. Le presse flanc peut ainsi être pivoté sur la coulisse et relié cinématiquement au berceau ou inversement être pivoté sur le berceau et relié cinématiquement à la coulisse. Dans les exemples présentés la position déployée de la coulisse correspond à la position dans laquelle le support pièce est apte à être engagé contre la pièce à usiner. Dans le cas ou la coulisse est le moyen de commande du support pièce, la position déployée de la coulisse peut correspondre à la position escamotée du support pièce et la position repliée de la coulisse correspondre à la position engagée du support pièce.

Les différents exemples présentés illustrent de façon non limitative différentes solutions pour intégrer un support pièce secondaire 6 au cœur d'une machine multiaxes afin de réaliser des opérations de reprise de la pièce à usiner en profitant de tous les axes de la machine tout en ayant un impact minimal sur les capacités d'usinage lorsque seul le porte pièce principal 3 est utilisé et sur l'accessibilité à la zone d'usinage.

## Revendications

1. Machine pour l'usinage de pièces comportant :
- un bâti (1),
- une broche-outil destinée (2) à porter un outil (2a),
- un porte pièce principal (3) destiné à maintenir une pièce à usiner (4), mobile par rapport à la broche-outil, en translation selon trois axes X, Y et Z non parallèles entre-eux, et en rotation selon un axe B, le porte pièce principal (3) étant monté sur un berceau (5b) solidaire d'un arbre creux (5a) mobile en rotation autour de l'axe B,
- un support pièce secondaire (6) actionnable par des moyens de commande entre une position d'engagement au contact de la pièce à usiner (4) et une position de dégagement sans contact avec la pièce à usiner,
**caractérisée en ce que** la machine comporte également un module de reprise (10) logé au moins partiellement dans l'arbre creux (5a) et s'étendant au travers d'une ouverture (5c) du berceau (5b), ledit module de reprise (10) comportant une coulisse (11) mobile en translation selon l'axe B entre une position repliée et une position déployée, le support pièce secondaire (6) étant relié cinématiquement à la coulisse (11).

2. Machine selon la revendication 1 dans laquelle le support pièce secondaire (6) est monté sur la coulisse (11).

3. Machine selon l'une des revendications précédentes dans laquelle le support pièce secondaire (6) est monté sur le berceau (5b).

4. Machine selon l'une des revendications précédentes dans laquelle les axes X, Y et Z sont perpendiculaires, l'axe Z étant vertical.

5. Machine selon l'une des revendications précédentes dans laquelle l'axe B est parallèle à l'axe Y.

6. Machine selon les revendications précédentes dans laquelle la broche outil (2) est montée sur une première glissière (7a) déplaçable selon l'axe Z en référence à une seconde glissière (7b) déplaçable selon l'axe X en référence au bâti (1) et dans lequel l'arbre creux (5a) est monté mobile en rotation sur une troisième glissière (7c) mobile en translation en référence au bâti (1) selon l'axe Y.

7. Machine selon l'une des revendications précédentes dans laquelle le porte pièce principal (3) est fixé à une broche-pièce (8) montée sur le berceau (5b) et mobile en rotation autour d'un axe C perpendiculaire à l'axe B.

8. Machine selon l'une des revendications précédentes dans laquelle le support pièce secondaire (6) est un porte pièce secondaire (6a) comportant des moyens de préhension aptes à saisir une pièce maintenue dans le porte pièce principal (3) lorsque la coulisse (11) est dans la position déployée et que le berceau (5d) est dans une position de transfert.

9. Machine selon la revendication précédente dans laquelle le module de reprise comporte des moyens de pivotement aptes à pivoter la coulisse (11) en rotation autour de l'axe B entre une orientation de transfert et une orientation d'usinage espacées d'une valeur déterminée comprise entre 0 et 180°.

10. Machine selon la revendication précédente dans laquelle la coulisse (11) est dans l'orientation de transfert quand elle est dans sa position déployée et dans l'orientation d'usinage quand elle dans sa position repliée.

11. Machine selon la revendication précédente dans laquelle les moyens de pivotement définissant la position angulaire de la coulisse (11) en référence au berceau sont constitués d'une came (11a) et d'un suiveur de came (10d), solidaire pour l'un de la coulisse (11) et pour l'autre du berceau (5b).

12. Machine selon l'une des revendication 1 à 7 dans laquelle le support pièce secondaire (6) est un presse flanc (6b) destiné à venir en appui sur une pièce à usiner.

13. Machine selon la revendication 7 dans laquelle le support pièce secondaire (6) est un support rotatif (6c) destiné à venir en appui sur une pièce à détourer.

14. Machine selon l'une des revendication 10 ou 11 dans laquelle l'actionnement des moyens de commande provoque un déplacement du support pièce secondaire (6, 6b, 6c) ayant une composante orthogonale au plan de posage de la pièce à usiner 4.
